(19)

Europäisches Patentamt

European Patent Office

Office européen des brevets

(11) **EP 4 425 439 A1**

(12) **EUROPEAN PATENT APPLICATION**

(43) Date of publication:
**04.09.2024 Bulletin 2024/36**

(21) Application number: **23159950.7**

(22) Date of filing: **03.03.2023**

(51) International Patent Classification (IPC):
**G06V 10/10** (2022.01)      **G06V 10/25** (2022.01)
**G06V 30/14** (2022.01)      **G06F 3/03** (2006.01)

(52) Cooperative Patent Classification (CPC):
**G06V 10/25; G06F 3/0317; G06V 10/17;**
**G06V 30/1444**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Freshape SA**
**1020 Renens (CH)**

(72) Inventors:
• **GUÉRIN, Guillaume**
  **1020 Renens (CH)**
• **UNUCHEK, Dmitrii**
  **1020 Renens (CH)**

(74) Representative: **ABREMA SA**
**Avenue du Théâtre 16**
**1005 Lausanne (CH)**

(54) **METHOD OF DETECTING AND PROCESSING SPATIALLY-DISTRIBUTED TWO-DIMENSIONAL MARKERS AND OPTICAL PEN OR STYLUS DEVICE EMBODYING THE SAME**

(57)   There is described a method of detecting and processing spaced-apart two-dimensional markers (C) that are distributed over a surface (S) to be imaged by means of an image acquisition sensor (10). The method comprises the following steps, namely, (a) acquiring an image (I) of at least a portion of the surface (S) by means of the image acquisition sensor (10), which image (I) includes multiple ones of said two-dimensional markers (C), (b) segmenting the image (I) acquired at step (a) into multiple sub-areas each containing a single two-dimensional marker (C), and (c) subjecting one or more of the sub-areas that contain a two-dimensional marker (C) to further processing. Segmenting the image (I) at step (b) includes (b1) sampling the image (I) at a coarse sampling resolution lower than a resolution of the image (I) to retrieve statistical data indicative of a distribution of the two-dimensional markers (C) in the image (I) acquired at step (a). Segmenting (b) also includes (b2) processing the statistical data retrieved at step (b1) to identify expected intermediate areas (AB) separating the two-dimensional markers (C) and expected marker areas (AC) containing the two-dimensional markers (C). Segmenting (b) further includes (b3) generating a segmentation mask ($M_{SEG}$) based on the identification of the expected intermediate areas (AB) and marker areas (AC) at step (b2). Lastly, segmenting (b) includes (b4) segmenting the image (I) acquired at step (a) into the multiple sub-areas based on the segmentation mask ($M_{SEG}$) generated at step (b3).

Fig. 6

**Description**

TECHNICAL FIELD

The present invention generally relates to a method of detecting and processing spatially-distributed, spaced-apart two-dimensional markers, such as but not limited to data matrices and like two-dimensional codes.

BACKGROUND OF THE INVENTION

Data matrix localization and decoding is known as such in the art.

Article titled "Data Matrix Code Location Based on Finder Pattern Detection and Bar Code Border Fitting", Qiang Huang et al., Hindawi Publishing Corporation, Mathematical Problems in Engineering, Volume 2012, Article ID 515296, pages 1-13, April 10, 2012 (https://doi.org/10.1155/2012/515296), discloses a data matrix detection algorithm based on finder pattern detection and bar code border fitting. The proposed method mainly involves three stages. It first extracts candidate regions that may contain a data matrix code by morphological processing and then locates the data matrix code roughly by detecting the "L" finder pattern and the dashed border on the candidate regions. Finally, the lines fitted with the border points are used as the borders of the data matrix code.

A similar approach is used in ZXing-C++ ("zebra crossing"), which is an open source, multi-format linear/matrix barcode image processing library implemented in C++ (see https://github.com/zxing-cpp/zxing-cpp).

Puck Barcode Reader is a software used by Diamond Light Source to scan data matrix codes placed on sample pins and on sample pucks, which software includes a data matrix locating algorithm that is based on binarization of the image containing the data matrix code to be located and contour detection to identify patterns that look like an "L" finder pattern (see https://github.com/DiamondLightSource/PuckBarcodeReader). This contour locator algorithm is supplemented by a (slower) square locator algorithm designed to identify the square contour of the data matrix code.

Article titled "Recognition of Data Matrix Codes in Images and their Applications in Production Processes", Ladislav Karrach et al., Sciendo, Volume 28 (2020), Issue 3 (September 2020), pages 154-161, July 17, 2020 (https://doi.org/10.2478/mspe-2020-0023), discloses a data matrix code recognition algorithm based on binarization of the image containing the data matrix code to be located and connected component labelling.

International (PCT) Publication No. WO 2008/096153 A1 discloses a method and apparatus for detecting a two-dimensional data matrix, which rely on specific pattern detection within a data matrix to locate it in an image.

The aforementioned methods and algorithms are based on the basic assumption that only one two-dimensional code is expected in the image, preferably well-centered. These algorithms are unable to detect and locate multiple two-dimensional codes present in the same image.

Furthermore, these approaches basically rely on defined gradients in the image to perform detection of the two-dimensional codes, such as identification of the "L" finder pattern in data matrix codes. Such gradients are quite expensive to compute and thus require substantial processing power, as well as take time to be processed, which is not suitable in application scenarios where processing has to be both cost-efficient to implement and fast to execute.

In addition, some approaches (like the aforementioned Puck Barcode Reader software) rely on trying harder to find a data matrix code if none can be detected on the first pass, therefore unnecessarily spending more time on processing images that do not contain any code at all.

Reliance on the use of multiple, spaced-apart two-dimensional codes (especially data matrices) that are distributed over a surface to be imaged is contemplated in certain particular scenarios. One such scenario is determination of a position and orientation of an optical pen or stylus device with respect to a surface provided with such codes, as disclosed e.g. in International (PCT) Publication No. WO 2022/064412 A1, the content of which is incorporated herein by reference in its entirety. In this application scenario, the optical pen or stylus device is provided with an image acquisition sensor to image a portion of the surface over which the optical pen or stylus device is moved, the two-dimensional codes encoding information as to their location on the surface and, thus, allowing determination of the position and orientation of the optical pen or stylus device with respect to the surface. For accurate determination of the position and orientation of the optical pen or stylus device to be achievable, multiple two-dimensional codes need to be visible in the image and be decodable individually and reliably. This application typically requires an implementation that is both cost-efficient to implement and quick to process the image acquired by the image acquisition sensor with a view to detect and decode the relevant two-dimensional codes contained in such image. More generally, such implementation is required for all use-cases that have at least one of the following constraints:

- small memory capacity;
- low processing power; and/or
- fast processing requirements, e.g. for low latency systems.

In effect, similar constraints also more generally apply for implementations that do not necessarily require decoding of two-dimensional codes as such, but e.g. identification and localization of two-dimensional markers, such as for augmented reality (AR) applications, which rely on so-called fiducial markers (such as ARTags) that are used to support 3D registration (alignment) and pose tracking.

There is therefore a need to provide a method that can reliably and quickly identify and locate multiple two-dimensional markers present in an image, be it two-dimensional codes, fiducial markers, or the like.

## SUMMARY OF THE INVENTION

A general aim of the invention is to provide a method of detecting and processing spatially-distributed, spaced-apart two-dimensional markers that obviates the limitations and constraints of the known solutions.

More specifically, an aim of the present invention is to provide such a solution that allows efficient and reliable detection and processing of such spaced-apart two-dimensional markers that are distributed over a surface to be imaged.

A further aim of the invention is to provide such a solution that allows efficient segmentation of the image acquired by the image acquisition sensor into multiple sub-areas each containing a single two-dimensional marker for subsequent processing, in turn allowing the possible application of traditional processing and/or decoding techniques to one or more of the sub-areas.

These aims, and others, are achieved thanks to the solutions defined in the claims.

There is accordingly provided a method of detecting and processing spaced-apart two-dimensional markers, the features of which are recited in claim 1, namely a method of detecting and processing spaced-apart two-dimensional markers that are distributed over a surface to be imaged by means of an image acquisition sensor, which method comprises the following steps:

(a) acquiring an image of at least a portion of the surface by means of the image acquisition sensor, which image includes multiple ones of said two-dimensional markers;

(b) segmenting the image acquired at step (a) into multiple sub-areas each containing a single two-dimensional marker; and

(c) subjecting one or more of the sub-areas that contain a two-dimensional marker to further processing.

According to the invention, segmenting the image at step (b) includes:

(b1) sampling the image at a coarse sampling resolution lower than a resolution of the image to retrieve statistical data indicative of a distribution of the two-dimensional markers in the image acquired at step (a);

(b2) processing the statistical data retrieved at step (b1) to identify expected intermediate areas separating the two-dimensional markers and expected marker areas containing the two-dimensional markers;

(b3) generating a segmentation mask based on the identification of the expected intermediate areas and marker areas at step (b2); and

(b4) segmenting the image acquired at step (a) into the multiple sub-areas based on the segmentation mask generated at step (b3).

The proposed solution constitutes a novel and efficient approach to quickly locate two-dimensional markers (including but not limited to two-dimensional codes such as data matrices) in the image. It allows segmentation, or splitting, of the acquired image into smaller sub-areas, each of which contains a single two-dimensional marker that can then be further processed individually, without suffering from interference of surrounding two-dimensional markers (or portions thereof) found in the image. This approach is particularly efficient and does not require extensive processing resources, which is key to allowing adequate application and implementation thereof in portable, handheld devices, such as but not limited to optical stylus or pen devices, or like application scenarios.

The present invention leverages a number of known and predetermined parameters, including:

- the fact that the two-dimensional markers have a generally known size and are distributed as an arrangement of spaced-apart markers exhibiting a quiet zone separating the two-dimensional markers;

- the properties of the optical system used to acquire the image is basically known, especially the magnification factor and the pixel size, from which the expected size of the two-dimensional markers (in pixels) in the image can be inferred;

- image illumination conditions may vary from one image to the other, but those illumination conditions can be assumed to be substantially homogeneous over the field of view (which does not exclude preprocessing of the image to make it more homogeneous if required); and

- the background is assumed to be monochromatic and homogeneous, which may be a result of prior image processing.

The invention leverages the above-mentioned "constraints" to efficiently locate and isolate the two-dimensional markers within the acquired image and feed them individually to an adequate algorithm for further processing, such as decoding. The invention is in effect flexible enough to allow individual processing of basically any sort of two-dimensional markers.

By way of preference, sampling the image at step (b1) includes subsampling the image acquired at step (a) to a lower processing resolution and generating a sampling grid at the coarse resolution.

The method advantageously further comprises the step of defining one or more regions of interest within the image covering only part of the image and processing only the part of the image contained in each region of interest at step (b). In this latter context, each region of interest may in particular be selected such that a number of two-dimensional markers contained or expected to be contained within each region of interest remains substantially constant.

In accordance with a particularly preferred embodiment, the statistical data are retrieved at step (b1) by computing a rolling mean and a rolling variance along horizontal and vertical sampling lines to generate corresponding statistical profiles. The rolling mean and rolling variance may especially be computed by applying a sliding filter along the horizontal and vertical sampling lines, which sliding filter is preferentially implemented as a rolling buffer.

Furthermore, processing the statistical data at step (b2) may especially include converting the statistical profiles into binary profiles by applying binarization thresholds to the statistical profiles. In that regard, in accordance with a preferred application scenario, the method of the invention is applied to the processing of consecutive images acquired by the image acquisition sensor, and the binarization thresholds are advantageously computed based on image statistics obtained from processing of an image that was previously acquired by the image acquisition sensor. The binarization thresholds may especially be computed by gathering the image statistics upon computation of the rolling means and rolling variance at step (b2).

Generating the segmentation mask at step (b3) preferably includes generating individual binary masks based on processing and binarization of the statistical profiles along horizontal and vertical sampling lines and merging the individual binary masks into a common binary mask from which the segmentation mask is derived. Advantageously, morphological regularization operations are performed on each of the individual binary masks prior to merging thereof into the common binary mask. Such morphological operations may especially include consecutive erosion and dilation (namely morphological closing) of the individual binary masks.

In addition, the method of the invention preferably further includes the step of identifying individual pixel clusters in the common binary mask and assigning them a unique label. In that regard, labelling of the individual pixel clusters is preferably performed using a Hoshen-Kopelman algorithm. In this context, the method advantageously further comprises the step of filtering out pixel clusters having a surface area that differs significantly from an expected surface area of each two-dimensional marker.

With regard to the aforementioned pixel clustering and labelling, the method may further comprise determining a barycentre of each pixel cluster in the common binary mask and determining corresponding coordinates of individual mask regions forming the segmentation mask, which individual mask regions correspond to the multiple sub-areas into which the image acquired at step (a) is to be segmented.

Referring again to an application scenario where the method of the invention is applied to the processing of consecutive images acquired by the image acquisition sensor, the coarse sampling resolution may advantageously be adapted dynamically from one acquired image to another.

The method of the invention may especially be implemented into an optical pen or stylus device comprising the image acquisition sensor for the purpose of determining a position and orientation thereof with respect to the surface over which the optical pen or stylus device is moved.

Also claimed is an optical pen or stylus device the features of which are recited in claim 15, namely, such as an optical pen or stylus device comprising an image acquisition sensor for acquiring an image of at least a portion of a surface over which the optical pen or stylus device is moved, the surface being provided with a plurality of spaced-apart two-dimensional markers that are distributed over the surface. The optical pen or stylus device further comprises a processing system configured to process images acquired by the image acquisition sensor and determine a position and orientation of the optical pen or stylus device with respect to the surface, the processing system being configured to detect and process the two-dimensional markers contained in images acquired by the image acquisition sensor in accordance with the method of the invention.

Further advantageous embodiments of the invention are discussed below.

BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:

> Figure 1 is a schematic illustration of an optical stylus or pen device embodying the invention in accordance with a preferred application scenario;
> Figure 2 is a schematic illustration of two optical stylus or pen devices being moved over a surface that is provided with an array of multiple, spatially-distributed two-dimensional markers, namely two-dimensional codes in the form of data matrices;
> Figures 2A and 2B are exemplary snapshots of two images as acquired by an image acquisition sensor of the optical stylus or pen devices of Figure 2;
> Figure 3A is a depiction of yet another image as acquired by the image acquisition sensor of the optical stylus or pen device, which image has been segmented into multiple sub-areas in accordance with a preferred embodiment of the invention in order to detect and locate eleven of the two-dimensional markers identifiable in the image;

Figure 3B is a schematic depiction of the underlying principle used to extract positional information from the two-dimensional markers as identified or located in e.g. the image of Figure 3A;

Figure 4A is a schematic depiction of the preferred embodiment of the invention applied in a case where the optical stylus or pen device is in a substantially upright position on top of the surface being imaged;

Figures 4B is a depiction of the image as acquired by the image acquisition sensor of the optical stylus or pen device of Figure 4A;

Figure 4C is a depiction of the image of Figure 4B following segmentation thereof and identification of a subset of thirteen individual two-dimensional markers found in the image;

Figure 5 is a schematic depiction of the preferred embodiment of the invention applied in a case where the optical stylus or pen device is in an inclined position on top of the surface being imaged and showing an image acquired in conditions exhibiting a drastically lower contrast compared to the conditions shown in Figures 4A-C;

Figure 6 is a schematic flowchart of the method of the invention;

Figure 7A is a depiction of yet another image as acquired by the image acquisition sensor of the optical stylus or pen device;

Figure 7B is a depiction of the image of Figure 7A being sampled at a coarse resolution lower than the resolution of the image to extract statistical data indicative of a distribution of the two-dimensional markers in the image;

Figure 7C is a depiction of a segmentation mask generated based on processing of the statistical data and identification of expected intermediate areas separating the two-dimensional markers and expected marker areas containing the two-dimensional markers;

Figure 7D is a depiction of the image of Figure 7A segmented into multiple areas based on the segmentation mask of Figure 7C and showing a subset of sixteen individual two-dimensional markers found in the image;

Figure 8 is a schematic flowchart of a preferred embodiment of the method of the invention;

Figures 9A-C are illustrative depictions showing definition of a region of interest within the image that is selected such that a number of two-dimensional markers contained or expected to be contained within the region of interest remains substantially constant.

Figures 10A-C are schematic illustrations drawing a distinction between the image at the acquired resolution, a sub-sampled image that has been down-sampled to a lower processing resolution, a sampling grid used to sample the sub-sampled image, and a sliding filter that is applied along horizontal (and vertical) sampling lines to extract relevant statistical profiles;

Figure 11 shows an illustrative example of statistical profiles of the rolling mean and rolling variance as extracted along a given vertical sampling line and a given horizontal sampling line of an exemplary image;

Figure 12 is a schematic illustration of binarization of an image using a binarization threshold extract from a histogram of the image;

Figure 13 is a schematic illustration of binary profiles obtained based on a binarization of the illustrative statistical profiles of Figure 11;

Figures 14A and 14B are illustrative depictions of corresponding binary mask that are generated as a result of sampling and processing of the relevant statistical profiles along, respectively, horizontal and vertical sampling lines;

Figure 14C is an illustrative depiction of a common binary mask obtained as a result of merging the binary masks of Figures 14A-B and applying morphological operations thereto; and

Figure 15 is a schematic illustration of a segmentation mask resulting from identification of individual pixel clusters in the common binary mask and labelling thereof, including determination of a barycentre of each pixel cluster.

## DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein.

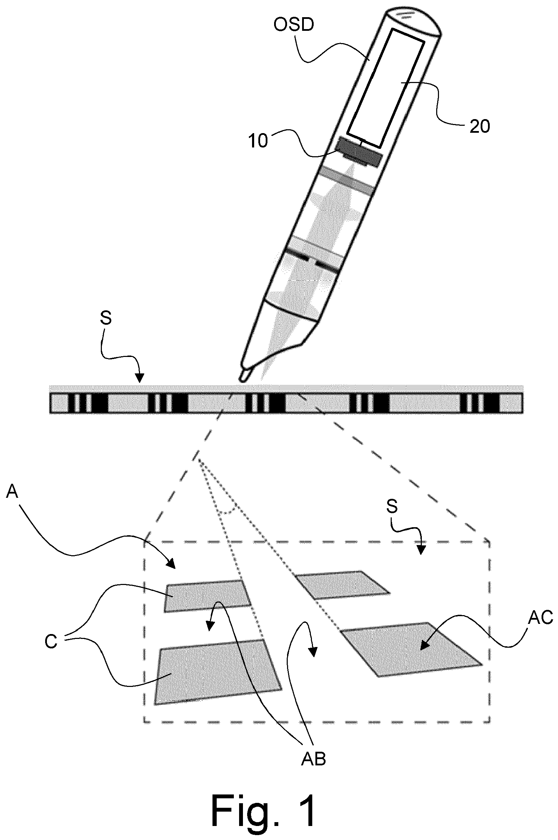

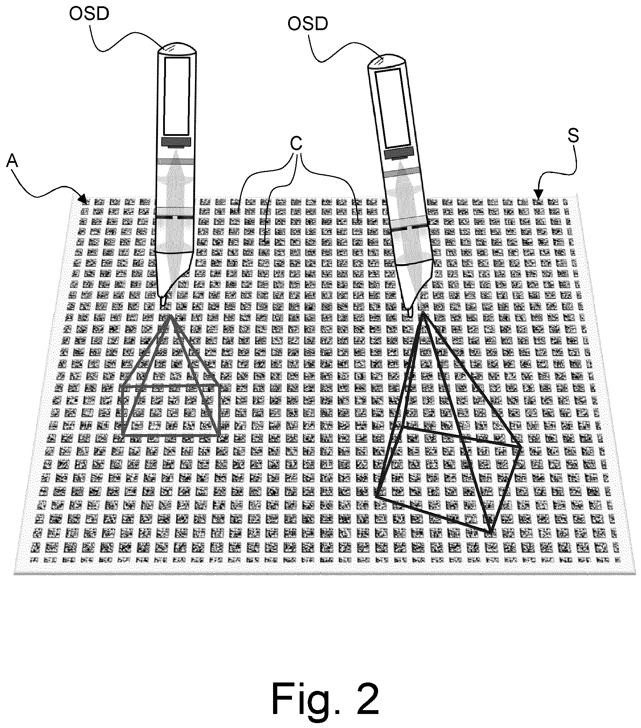

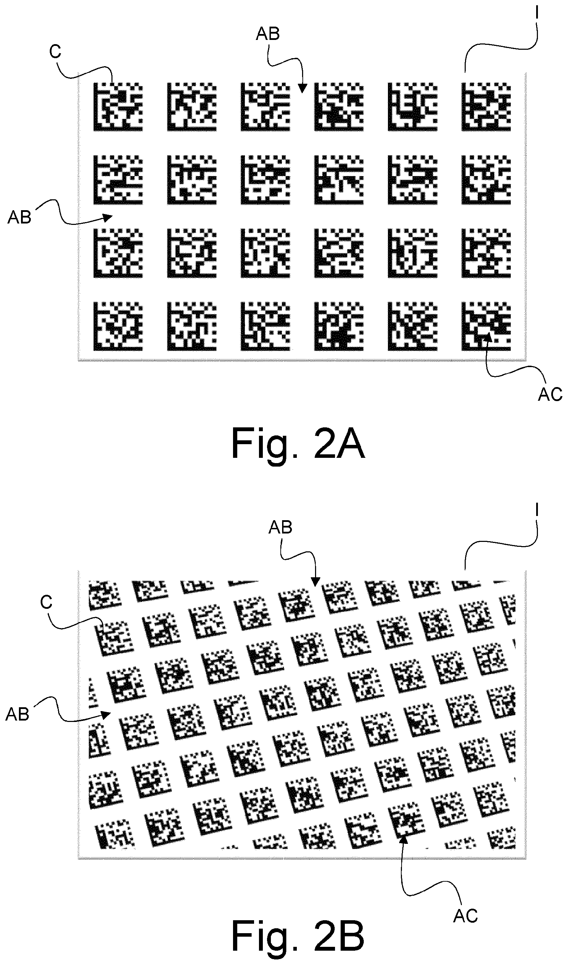

Embodiments of the method of the invention will especially be described hereinafter in the particular and preferred context of a use of an optical pen or stylus device as schematically illustrated in Figure 1 and disclosed in greater detail in International (PCT) Publication No. WO 2022/064412 A1. The optical pen or stylus device OSD shown in Figure 1 will not be described in great detail in the present description as reference can be made to the disclosure of the aforementioned PCT publication. It suffices to understand that the optical pen or stylus device OSD comprises an image acquisition sensor 10 for acquiring an image of a portion of a surface S over which the optical pen or stylus device OSD is moved. This surface S is provided with a plurality of spaced-apart two-dimensional markers, namely two-dimensional codes C (such as but not limited to data matrices), that are distributed over the surface S with a defined periodicity in the form of an array A of individual, spaced-apart codes C. As schematically depicted in Figure 1, the two-dimensional markers C are constrained within generally defined marker areas AC (also referred to in this case as "code areas") and are distributed such that intermediate areas AB (also referred to as "background areas" or "inter-code areas") are formed between neighbouring two-dimensional markers C (see also Figures 2A and 2B).

In the following, the expression "two-dimensional markers" and "two-dimensional codes" will be used interchangeably, it being understood that the relevant two-dimensional markers C shown in the drawings encode data as to their position over the surface S and that a selected subset of such two-dimensional markers C are further processed, namely decoded, to extract such positional data. The invention is not however limited to implementation scenarios where the two-dimensional markers are two-dimensional codes. The invention is equally applicable to implementation scenarios where further processing of the two-dimensional markers simply involves identification and localization of relevant two-dimensional markers (without any particular decoding of data).

In the contemplated application scenario, the image acquisition sensor 10 of the optical stylus or pen device OSD is typically configured to acquire multiple consecutive images (or image frames) at a suitable frame rate. For the sake of illustration, the image acquisition sensor 10 is configured to acquire consecutive images at an exemplary frame rate of approximately 30 FPS.

The optical pen or stylus device OSD further comprises a processing system 20 configured to process images acquired by the image acquisition sensor 10 and determine a position and orientation of the optical pen or stylus device OSD with respect to the surface S. The processing system 20 is especially configured to detect and locate the two-dimensional codes C contained in images acquired by the image acquisition sensor 10 in accordance with the method of the invention, as described in greater detail hereafter, with a view to be further processed, namely decoded.

Figure 2 is a schematic illustration of two optical stylus or pen devices OSD being moved over a surface S that is provided with an array A of multiple, spatially-distributed two-dimensional codes C in the form of data matrices. Each data matrix encodes a given position of the two-dimensional code C on the surface S. Each optical stylus or pen device OSD exhibits a distinct position and orientation with respect to the surface S and the image acquisition sensor 10 thereof accordingly acquires an image I of a distinct portion of the surface S, as schematically illustrated by Figures 2A and 2B.

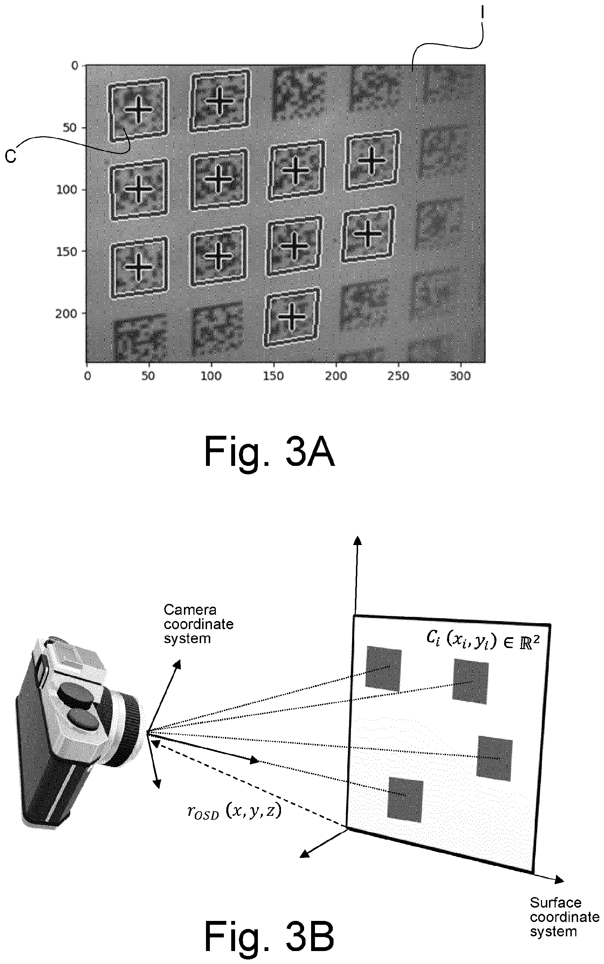

The goal of the present invention is to properly identify and locate relevant two-dimensional markers C within the image I acquired by the image acquisition sensor 10 of the optical stylus or pen device OSD with a view to be further processed, namely decoded, and thereby allow determination of a position and orientation of the optical stylus or pen device OSD with respect to the surface S. Figure 3A is a depiction of another illustrative image I as acquired by means of the optical stylus or pen device OSD, which image I has been segmented into multiple sub-areas in accordance with a preferred embodiment of the invention. In the illustrated example, eleven of the two-dimensional codes C identifiable in the image I have been detected and located, which two-dimensional codes C are highlighted in Figure 3A by quadrilateral polygons and a "+" sign positioned at a centre thereof.

In the illustrated application scenario, each two-dimensional code C encodes a corresponding position thereof on the surface S and decoding of multiple codes C thereby allows actual determination of the position and orientation of the optical stylus or pen device OSD with respect to the surface S, as schematically illustrated by the principle shown in Figure 3B. Such determination can be performed in accordance with processing techniques that are known as such in the art and do not need to be described here. The relevant approach is conventionally referred to in the art as the "Perspective-n-Point" (or "PnP") problem, and reference can for instance be made in that regard to the following articles:

- "EPnP: An Accurate O(n) Solution to the PnP Problem", Vincent Lepetit et al., International Journal of Computer Vision, Volume 81 (2009), Issue 2, pp. 155-166, Springer Verlag, published July 19, 2008 (https://doi.org/10.1007/s11263-008-0152-6); and
- "Infinitesimal Plane-Based Pose Estimation", Toby Collins et al., International Journal of Computer Vision, Volume 109 (2014), Issue 3, pp. 252-286, Springer Verlag, published July 24, 2014 (https://doi.org)/10.1007/s11263-014-0725-5).

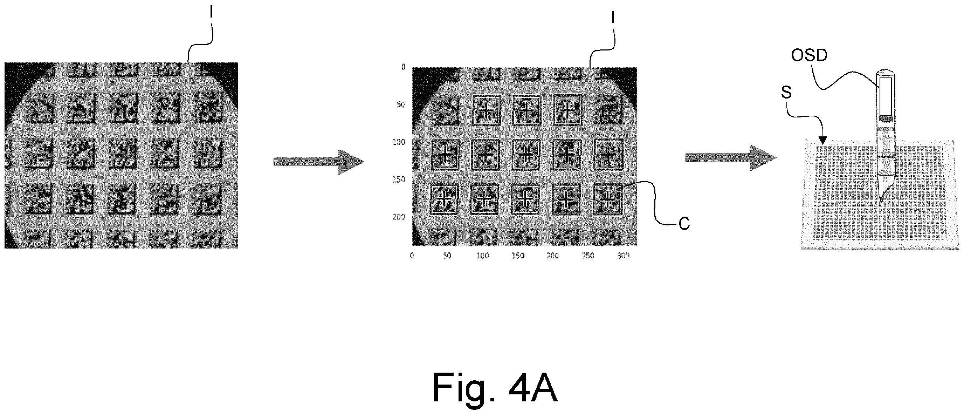

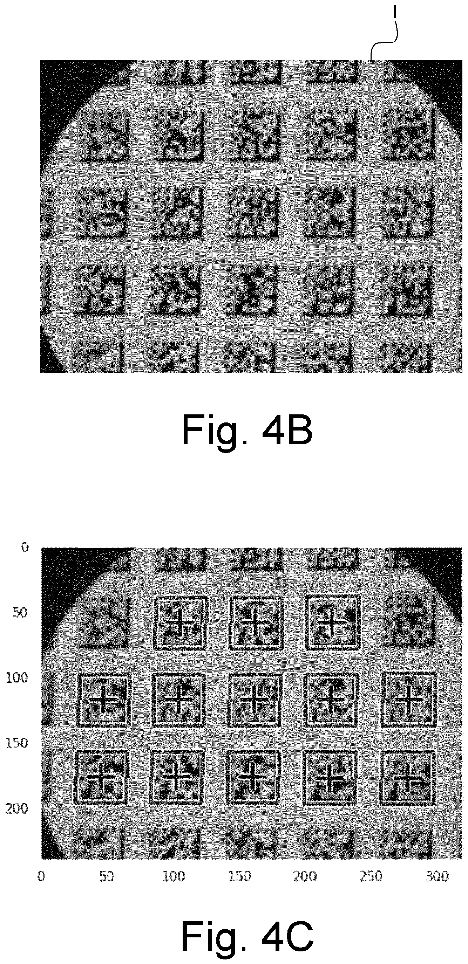

Figure 4A is a schematic depiction of the invention being applied in a case where the optical stylus or pen device OSD is in a substantially upright position on top of the surface S being imaged, resulting in the acquisition of a corresponding image I (as shown on the left-hand side of Figure 4A, as well as separately in Figure 4B) and the segmentation thereof into multiple sub-areas each containing an identified two-dimensional code (as shown on the central portion of Figure 4A, as well as separately in Figure 4C). In this latter example, thirteen of the two-dimensional codes C identifiable in the image I have been detected and located, which two-dimensional codes C are once again highlighted in Figures 4A and 4C by quadrilateral polygons and a "+" sign positioned at a centre thereof.

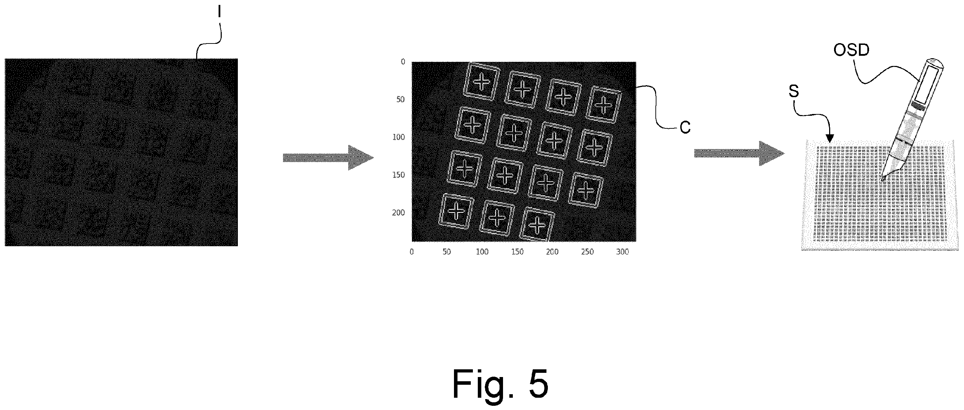

Figure 5 is a schematic depiction of the invention being applied in yet another illustrative case where the optical stylus or pen device OSD is in an inclined position on top of the surface S being imaged and where the image I is acquired in conditions exhibiting a drastically lower contrast compared to the conditions shown in Figure 4A-C. While the image I appears to be very dark and the image contrast is low, two-dimensional codes can in effect be identified and located thanks to the invention, which demonstrates the robustness of the approach thanks to statistics extraction that allows adaptive thresholding, as explained hereafter. In effect, in the illustrated example, fifteen of the two-dimensional codes C identifiable in the image I have been detected and located, which two-dimensional codes C are once again highlighted in Figure 5 by quadrilateral polygons and a "+" sign positioned at a centre thereof.

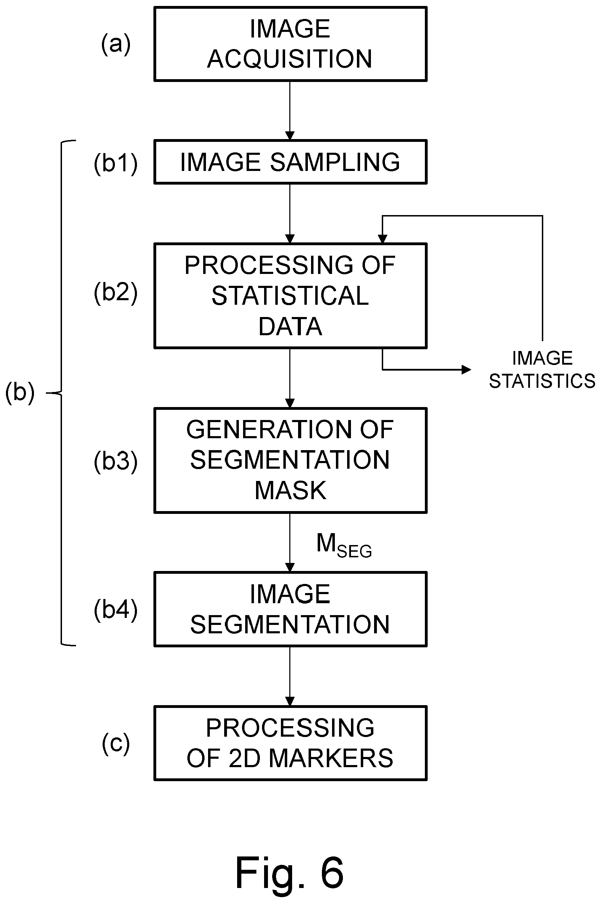

Figure 6 is a schematic flowchart of the method of the invention. From a general perspective, three main steps (a), (b) and (c) are undertaken, namely:

(a) acquiring an image I of at least a portion of the surface S by means of the image acquisition sensor 10 (which image I includes multiple ones of the two-dimensional markers C that are distributed spatially over the surface S);

(b) segmenting the image I acquired as step (a) into multiple sub-areas each containing a single two-dimensional marker C; and

(c) subjecting one or more of the sub-areas that contain a two-dimensional marker C to further processing.

More specifically, segmenting the image I at step (b) includes:

(b1) sampling the image I at a coarse sampling resolution lower than a resolution of the image I to retrieve statistical data indicative of a distribution of the two-dimensional markers C in the image I acquired at step (a);

(b2) processing the statistical data retrieved at step (b1) to identify the expected intermediate areas AB separating the two-dimensional markers C and the expected marker areas AC containing the two-dimensional markers C;

(b3) generating a segmentation mask, designated $M_{SEG}$, based on the identification of the expected intermediate areas AB and marker areas AC at step (b2); and

(b4) segmenting the image I acquired at step (a) into the multiple sub-areas based on the segmentation mask $M_{SEG}$ generated at step (b3).

This approach ensures that the image I can be quickly and efficiently processed, without this necessitating considerable processing power or substantial processing time, to extract segmentation information that can adequately identify, locate and isolate potential candidates for subsequent processing, such as decoding. In effect, each sub-area obtained as a result of the segmentation contains only a single two-dimensional marker candidate that can appropriately be further processed by any known technique, and this with a good likelihood of success, provided image quality is sufficient.

It is also worth pointing out that the segmentation approach being contemplated also allows to extract generic information as regards the spatial distribution of the identified markers C in the image I which, although insufficient as such to allow actual and accurate positioning, can be exploited to infer certain general positional parameters of the optical stylus or pen device OSD with respect to the surface S. This information could in effect be exploited to assist determination of the position and orientation of the optical stylus or pen device OSD. This information can also be exploited as an a priori to determine orientation and localization of the markers to speed-up subsequent processing of the markers C during the next step as the general orientation of each marker is in effect known.

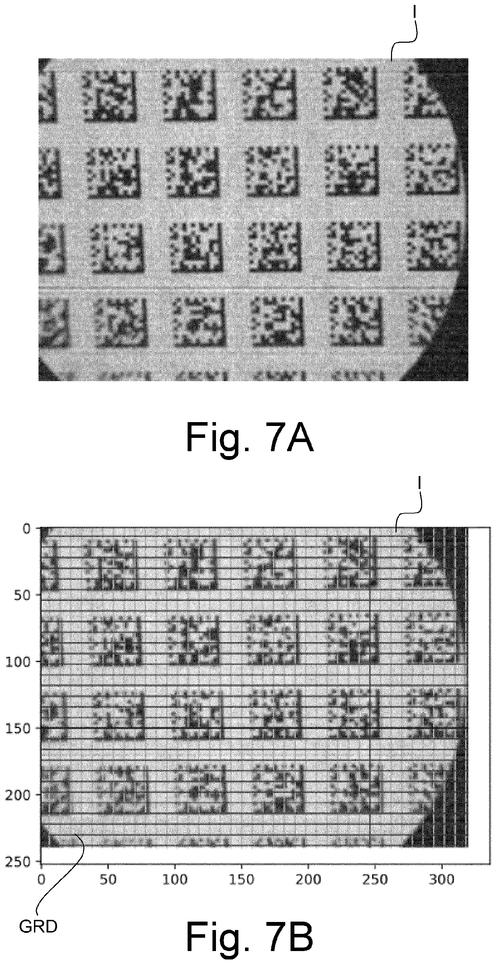

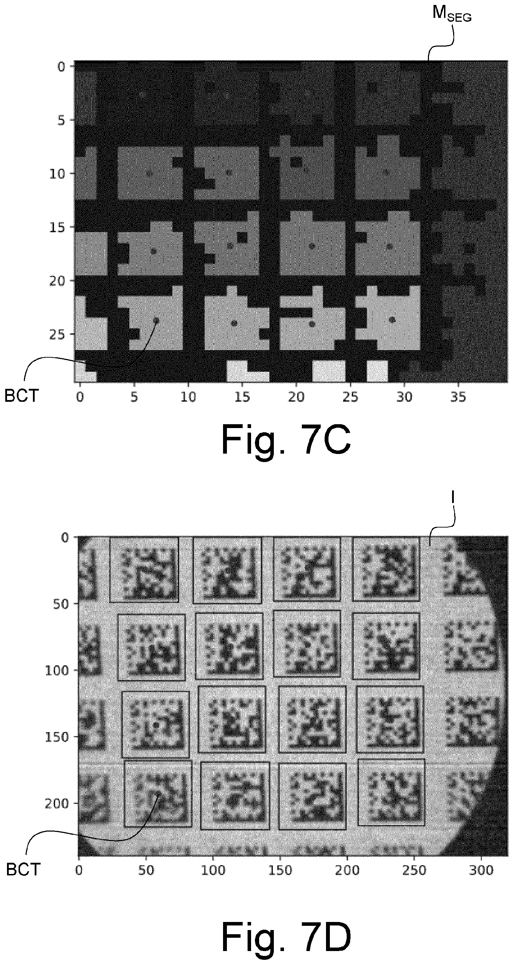

Figures 7A-D are various depictions illustrating the aforementioned steps being carried out in accordance with the invention. Figure 7A is a depiction of an illustrative image I as acquired by the image acquisition sensor 10 of the optical stylus or pen device OSD (step (a) in Figure 6). Figure 7B is a depiction of the image I of Figure 7A being sampled at a coarse sampling resolution (step (b1) in Figure 6) to extract statistical data indicative of a distribution of the two-dimensional markers C in the image I. In accordance with a preferred embodiment of the invention, such sampling is undertaken along horizontal and vertical sampling lines (as illustrated schematically in Figure 7B by a grid overlay). Even more specifically, relevant statistical profiles are generated at step (b1) by computing a rolling mean as well as a rolling variance along the horizontal and vertical sampling lines. Other metrics could however be contemplated, including e.g. image derivatives to identify significant edges (such as by applying Laplacian or Sobel edge detectors) or other local averaging methods (the rolling mean being one of them). Following processing of the statistical data at step (b2), the expected intermediate (inter-code) areas AB and marker (code) areas AC are identified and a corresponding segmentation mask $M_{SEG}$ is generated, as schematically depicted by Figure 7C (step (b3) in Figure 6). More specifically, in Figure 7C, a plurality of individual clusters each corresponding to a given two-dimensional marker C are isolated and, advantageously, a barycentre BCT thereof is computed, which barycentre BCT provides an indication a position of a centre of each sub-area for segmentation of the image I, as shown in Figure 7D (step (b4) in Figure 6). In the illustrated example, each sub-area is basically defined by reference to its barycentre BCT and given dimensions of each sub-area which can be predetermined based on the assumed and expected dimensions of the two-dimensional markers C and the spatial distribution thereof. Each sub-area is in effect defined such that the dimensions thereof are slightly larger than that of the two-dimensional markers C and also accounts for the marker orientation/rotation to ensure that all of the information is available in the segmented image area for adequate further processing.

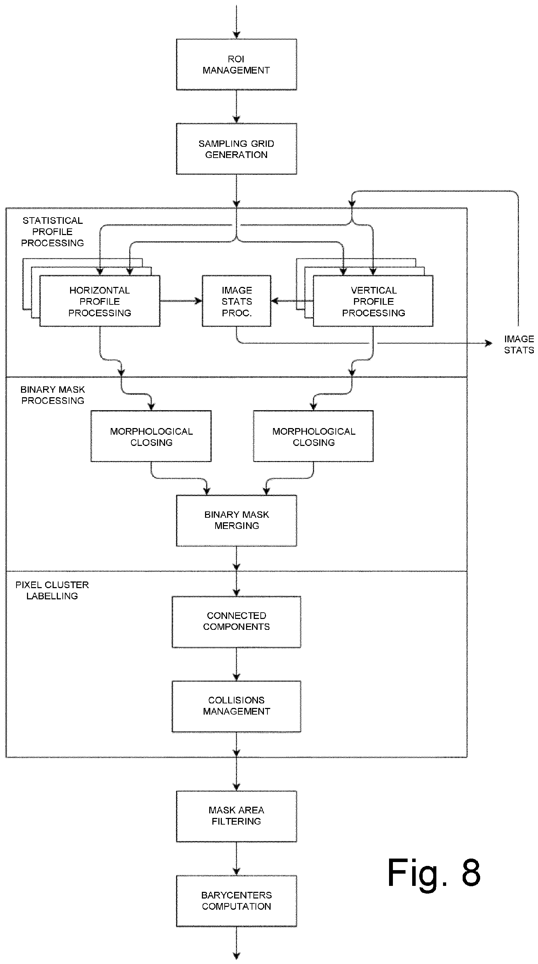

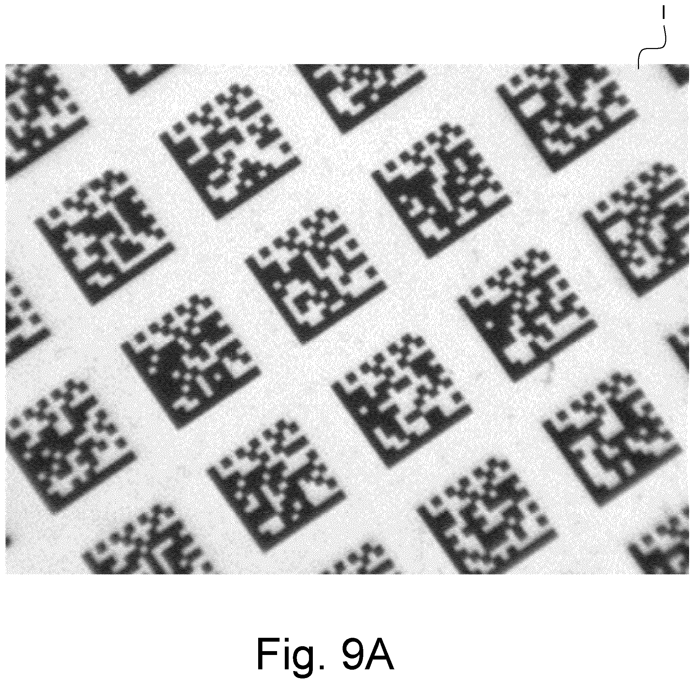

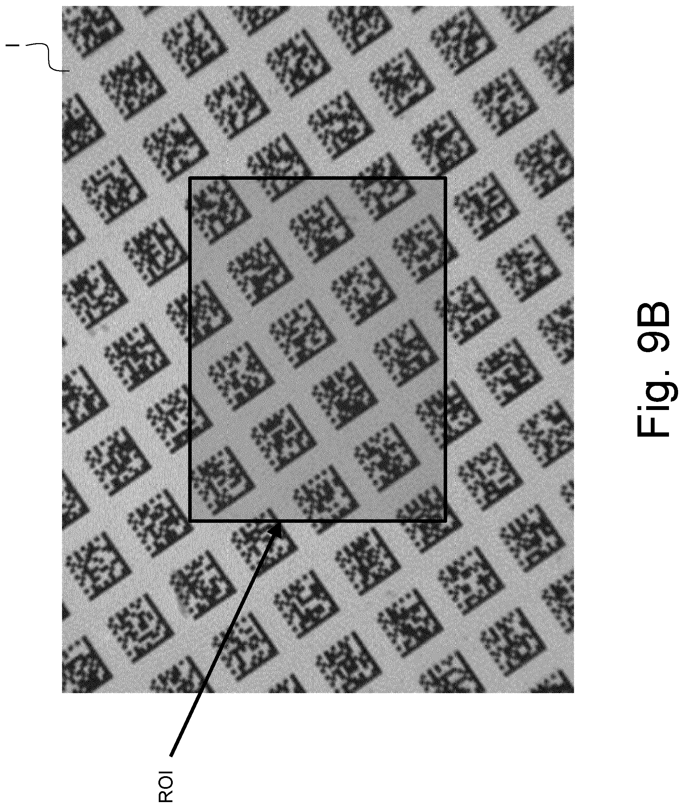

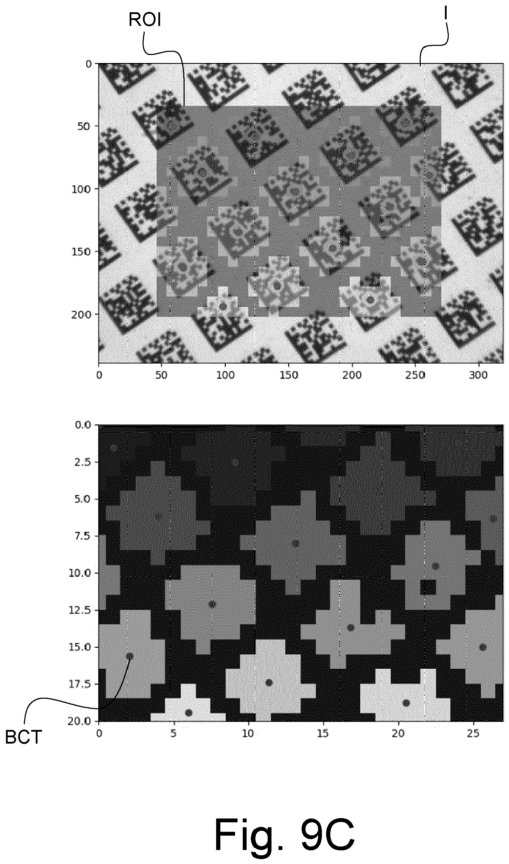

Figure 8 is a schematic flowchart of a particularly preferred embodiment of the method of the invention that will be described in greater detail with further reference to Figures 9A-C to 15 and the sections below.

ROI management

Image resolution inherently impacts processing time, and computation time will in effect be dependent on the relevant resolution at which the image is processed and sampled. In particular, in the contemplated application scenario, computation time would increase if a subsampling factor applied to the image I is lower to cope with relatively small marker areas in the image I (for instance because of lower magnification, meaning that the distance increased between the surface S and the optical stylus or pen device OSD). In order to cap the processing time and the necessary memory requirements, an option may advantageously consist in defining a region of interest ROI to process only part of the image as schematically depicted in Figures 9A-C. This region of interest ROI can be used as input of the algorithm that can be configured by the user to keep the processed surface area substantially constant independently of magnification changes. In this way, the number of markers available for further processing remains more or less constant whatever the distance between the optical stylus or pen device OSD and the surface S, and the resulting processing time remains quite constant as well, despite the necessity to increase the sampling resolution to sample smaller markers.

In practice, the expected size of the two-dimensional markers C (and therefore the size of the region of interest ROI) could be inferred from optical parameters of the optical stylus or pen device OSD and the distance to the surface S. The optical stylus or pen device OSD can especially be configured to estimate the distance by means of a time-of-flight sensor used to determine a voltage to be applied to an electro-tunable lens arrangement to adjust focussing and magnification, thereby providing information to adjust the ROI size. In embodiments where such information would not be available, the ROI size could be determined iteratively based on previous images or by way of a dedicated image processing.

Subsampling strategy (sampling grid generation)

With regard to the preferred embodiment of the method of the invention shown in the flow chart of Figure 8, sampling of the image I is in effect advantageously based on two kinds of subsampling being performed on the image I in order to optimize computation time, namely:

- subsampling of the image at a lower *processing resolution* (which is the highest resolution used to perform computation of the relevant statistical data); and
- sampling at a *coarse sampling resolution* (also referred to as *sampling grid resolution*) at which two-dimensional markers are expected to be detected and the location thereof is expected to be determined.

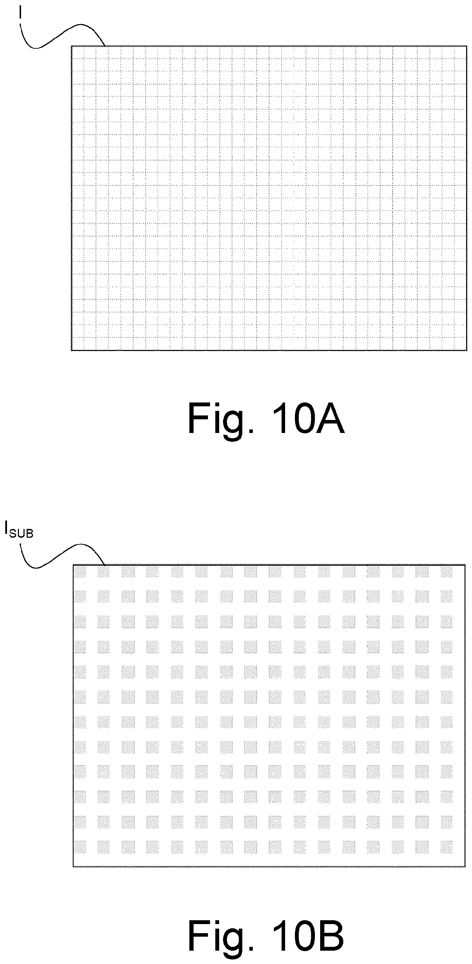

More specifically, let us consider the schematic illustration of Figure 10A which is meant to illustrate an image I at full resolution (or *sensor resolution*), this image I is subsampled to a lower *processing resolution* in order to process only one over $n$ pixels in each dimension, for instance one over two pixels ($n$ being equivalent to 2 in such case). This means that, in this example, only $1/n^2$ of the overall pixels are being processed, as schematically illustrated by the "grey" pixels in the resulting subsampled image $I_{SUB}$ depicted in Figure 10B. Factor $n$ can be designated as subsampling factor.

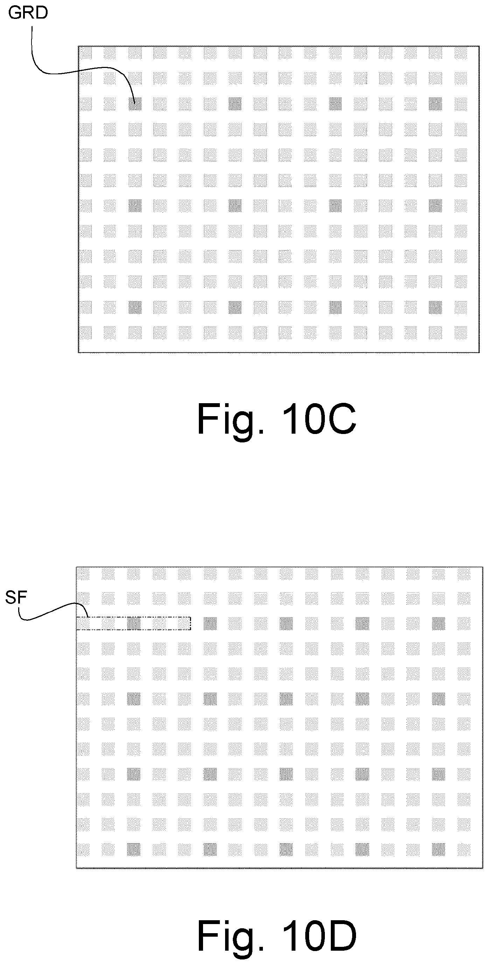

As the main goal is to detect marker objects whose size is way bigger than the *sensor resolution* and *processing resolution,* the algorithm of the invention works based on image sampling at a coarse resolution. Compared to the *processing resolution,* image sampling is undertaken by downscaling the relevant sampling grid by another $m$ factor, which further contributes to both memory and processing cost reduction. Let us consider Figure 10C which schematically highlights darker pixels corresponding to an illustrative sampling grid GRD. Each one of the darker pixels of the sampling grid GRD is located at $(x_i, y_i)$ coordinates, where the relevant sets of $x_i$ and $y_i$ coordinates can respectively be referred to as *hticks* and *vticks.* Both sets define the relevant sampling grid GRD.

Before doing any processing on the image, the sampling grid GRD is preferably determined and defined such that it adapts to the expected marker size (the smaller the marker size, the denser the sampling grid GRD). As the distance to the relevant scene changes, the marker size may vary dynamically from one image to another. The sampling gird GRD is furthermore determined and defined such that it takes the processing subsampling factor into account for border management.

Computation and processing of statistical data (statistical profile processing)

In order to obtain one sampling value for each of the darker pixels of the sampling grid GRD, each line (horizontal sampling line), respectively column (vertical sampling line) of the sampling grid GRD is processed at the *processing resolution* (grey pixels). For the sake of illustration, the number of horizontal sampling lines (and corresponding number of statistical profiles computed therealong) is equal to the sampling grid GRD vertical dimension, which is approximately equal to the *height* of the image I divided by the relevant sampling grid factor, i.e. $\approx height/(m \times n)$ (without considering filtering border management). The length of each statistical profile, on the other hand, is determined by the horizontal processing resolution, that is the length is approximately equal to the *width* of the image divided by the relevant subsampling factor, i.e. $\approx width/n$.

In accordance with the preferred embodiment of Figure 8, sampling of the image I and retrieval of the desired statistical data here consists in the computation of the rolling mean and rolling variance along each of the horizontal and vertical sampling lines of the sampling grid GRD to generate corresponding statistical profiles. Such computation can conveniently be carried out by running a sliding filter SF (as schematically depicted in Figure 10D) across the relevant sampling line. Such sliding filter SF can especially be implemented as a rolling buffer to minimize the number of read accesses in memory necessary for each output value (i.e. one read access per value instead of $k$, $k$ being the sliding filter size).

In the illustrated example, considering that each two-dimensional code C contains random information, one cannot determine beforehand how it should look like. It is easier in that regard to classify the substantially uniform background and treat the two-dimensional codes as noise. The basic goal of the statistical data is therefore to allow characterization and detection of the expected intermediate (inter-code) areas AB, and differentiation thereof from the marker (code) areas AC. In the illustrated example, the intermediate areas AB should exhibit a high mean (i.e. bright pixels) - assuming black codes printed on a white background - and a low variance (i.e. only photonic noise), by contrast to the marker areas AC. Both the rolling mean and rolling variance can thus be compared to expected thresholds and be fused to output a binary profile indicating whether the relevant sampling point belongs to an intermediate area AB or a marker area AC.

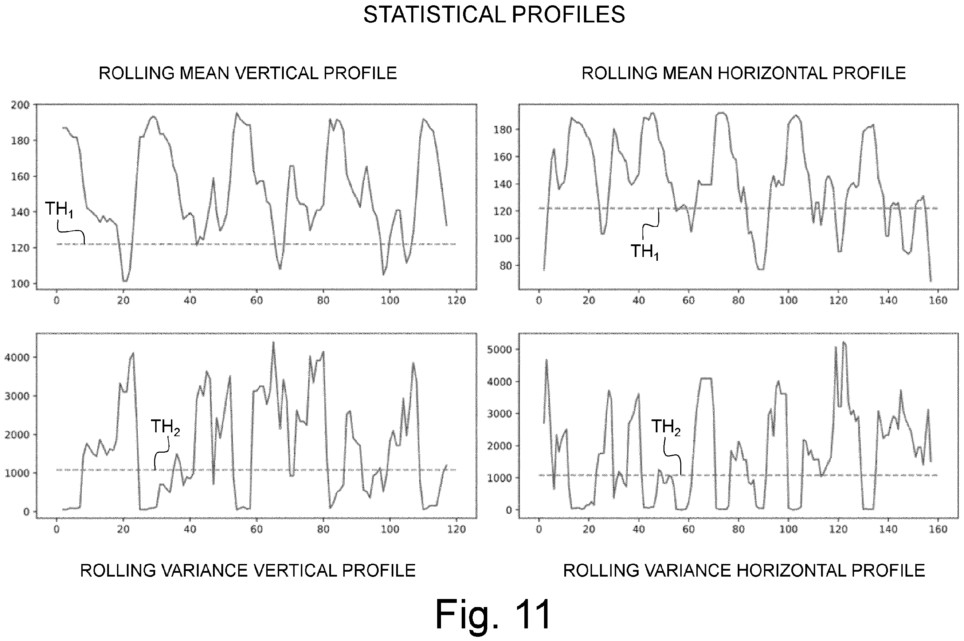

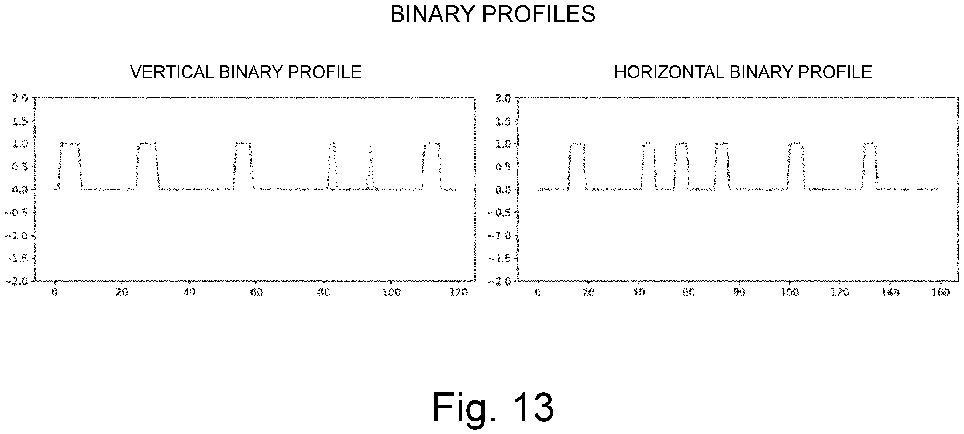

Figure 11 shows an illustrative example of statistical profiles of the rolling mean (also referred to as "rolling mean profiles" - see graphs depicted in the upper portion of Figure 11) and rolling variance (also referred to as "rolling variance profiles" - see graphs depicted in the lower portion of Figure 11) as extracted along a given vertical sampling line (left-hand side of Figure 11) and a given horizontal sampling line (right-hand side of Figure 11) of an exemplary image (such as the image I shown in Figures 7A-B). Relevant binarization thresholds $TH_1$, $TH_2$ are shown as dotted horizontal lines in the graphs and used to transform and merge these statistical measurements into a common binary profile as separately shown in Figure 13.

Determination of binarization thresholds In order to convert the statistical profiles into corresponding binary profiles that segment, i.e. allow to draw a distinction between the expected intermediate (background) areas AB and marker areas AC, the relevant binarization thresholds must be adequately chosen.

## Splitting threshold

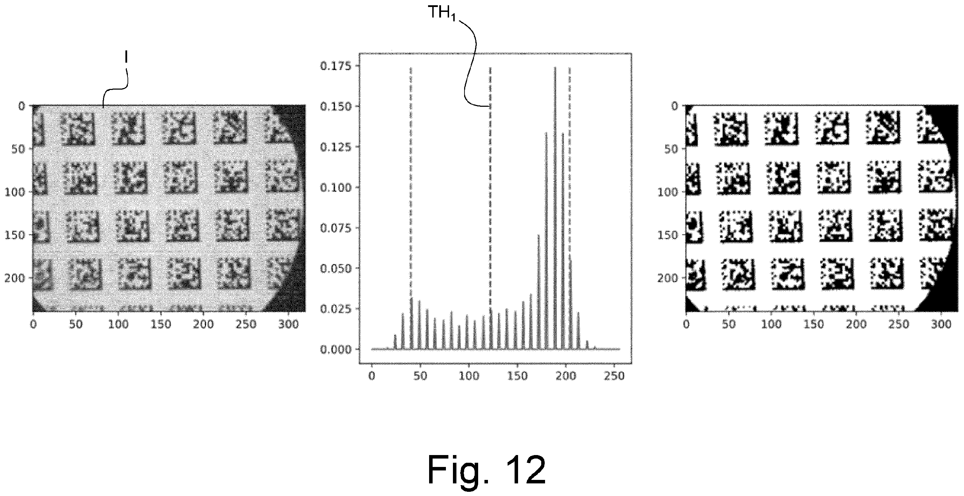

Determining the binarization threshold $TH_1$ to be used to perform the segmentation of markers vs. background, i.e. segmentation of the rolling mean profiles, would be easy if exposure remained constant, but such is not the case in practice as exposure can vary greatly depending on the distance between the optical stylus or pen device OSD and the surface S. One therefore needs to be robust to illumination changes. Statistically speaking, knowing the size, the type of patterns, as well as the periodicity of the markers allows determining a good estimate of the proportion of black/dark and white/bright pixels within the image. Using a histogram as depicted schematically in Figure 12, it is reasonably easy to determine which grey level should be used as binarization threshold $TH_1$, namely, as the midpoint $TH_1$ (identified by the dotted vertical line in the central portion of the histogram of Figure 12) between the predominantly dark and predominantly bright pixels found in the histogram (identified by the two dotted vertical lines, on either side of the histogram of Figure 12).

## Variance threshold

The variance threshold $TH_2$ for an edge can also be determined statistically by knowing the image contrast. Indeed, if the black/darkest point (*blackPoint*) and the white/brightest point (*whitePoint*), respectively representing the first and last percentiles of the histogram, have been determined, the standard deviation $\sigma$ of a perfect binary edge can be defined as:

$$\sigma = \frac{whitePoint - blackPoint}{2}$$

Then, from this theoretical variance, some margin/tolerance can be added to ensure error-proof segmentation of the rolling variance profiles.

## Computation of the binarization thresholds

As mentioned above, the binarization threshold $TH_1$, $TH_2$ can be obtained from statistics on the image. However, in the contemplated application scenario where computing of the binarization thresholds is to be implemented by the optical stylus or pen device OSD, computing of the image statistics from the current image as a whole would require an additional pass on the image, meaning another read access to the pixels which would therefore be somewhat inefficient to implement. Therefore, in order to optimize processing, a histogram is filled and compiled as pixels are accessed by the sliding filter. In this way, some global image statistics on the current image can be obtained basically for "free". The only price to pay is that these image statistics can only be computed once all statistical data (or at least a significant portion thereof) have been processed, meaning that the relevant image statistics (and the actual binarization thresholds derived therefrom) are not immediately available when (first) processing the statistical data. Nevertheless, one can leverage the fact that the image statistics are not expected to change drastically between two consecutive image frames. In other words, one can simply opt to use the image statistics obtained from the previously processed image to process the statistical data of the current image.

Based on the histogram compiled at the end of the processing of the statistical data of each image, one can accordingly define the mean level, black level, and white level, and therefore the image contrast, and set and define the relevant binarization thresholds $TH_1$, $TH_2$ as indicated above for the following image frame. At the same time, further image statistics could also be computed to be used by other algorithms to mutualize computation cost, including e.g. determination of contrast, entropy, white point (average value of brightest pixels), black point (average value of darkest pixels), etc., which may be exploited to feed other algorithms relying on image properties, such as auto-focus, auto-exposure or contrast enhancement (tone mapping).

As mentioned above, the aforementioned trick may be contemplated and implemented because image exposure and contrast is not expected to vary drastically between consecutive image frames that are acquired at a sufficiently high frame rate of e.g. approximately 30 FPS.

## Binary profiles generation

As mentioned above, a pair of binary profiles, namely a horizontal binary profile and a vertical binary profile, is created as a result of the processing of each set of statistical profiles along the horizontal and vertical sampling lines, binarization thereof using the relevant binarization thresholds $TH_1$, $TH_2$, and merging of the resulting metrics. Figure 13 shows the results of the relevant binarization and merging of the statistical profiles depicted in Figure 11, with value "1" being indicative of an expected intermediate area AB, while value "0" is indicative of an expected marker arear AC. Figure 13 shows that potential artefacts might result from the relevant processing or that parts of the intermediate areas AB and marker areas AC may not necessarily be identifiable in one and/or the other binary profile. This is to be expected from a practical perspective, but processing of all relevant statistical data will usually yield a sufficiently representative segmentation of the intermediate areas AB and marker areas AC. These potential artefacts can be partly detected and removed by post-processing. The remaining artefacts will be removed by further processing of the binary masks as explained hereafter.

## Profiles subsampling

As mentioned above, according to the embodiment shown in Figure 8, the statistical data are computed at the *processing resolution* (i.e. every *n* pixels), one statistical profile being computed every $m \times n$ line (or column) along the sampling grid GRD. In order to obtain a segmentation mask at the appropriate *sampling grid resolution,* the statistical data must accordingly be subsampled again in one dimension to get a statistical representation with *(height* $\times$ *width)/(m* $\times$ *n)*$^2$ values.

## Generation and merging of binary masks (binary mask processing)

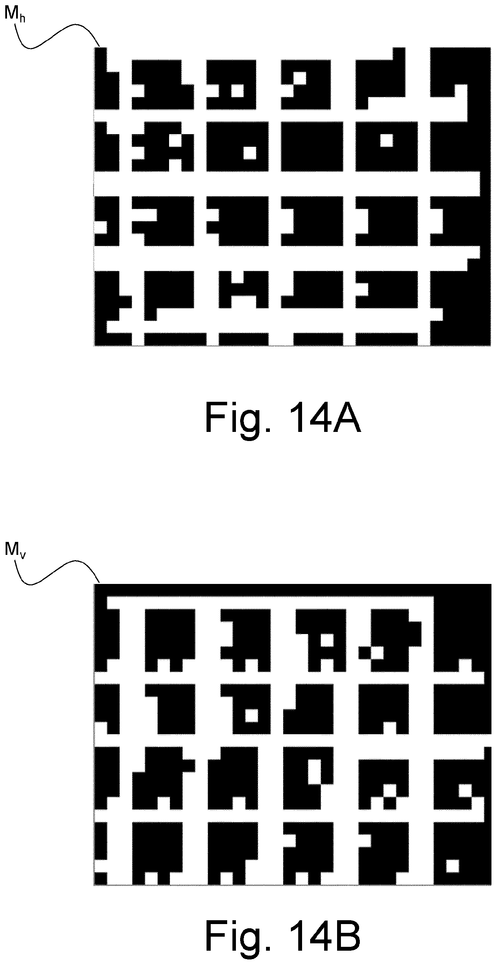

For each of the statistical profiles processed along the horizontal sampling lines and the vertical sampling lines, an individual binary mask $M_h$, respectively $M_v$ can be generated by two-dimensional stacking of the aforementioned subsampled binary profiles. Figure 14A shows the result of vertical stacking of all relevant horizontal binary profiles as computed along the horizontal lines of the sampling grid GRD, while Figure 14B shows the result of horizontal stacking of all relevant vertical binary profiles as computed along the vertical lines of the sampling grid GRD. In the illustrated example, and in a manner similar to the binary profiles shown in Figure 13, the binary masks $M_h$, $M_v$ have a value of "1" (shown as a white pixel in Figures 14A-B) in areas identified as corresponding to expected intermediate areas AB or a value of "'0" (shown as a black pixel in Figures 14A-B) in areas identified as corresponding to expected marker areas AC.

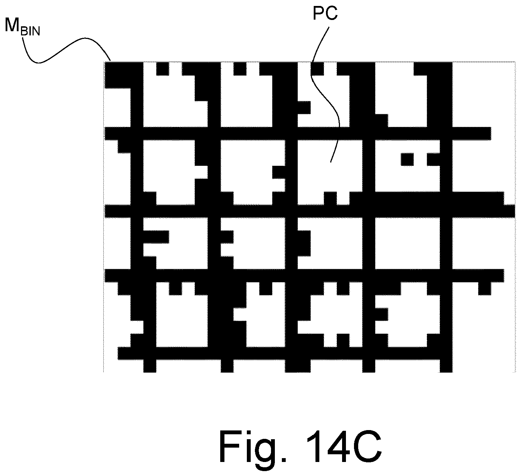

In the contemplated embodiment, the next step consists in merging the individual binary masks $M_h$, $M_v$ to obtain a more robust common binary mask $M_{BIN}$ as depicted e.g. in Figure 14C. Prior to merging of the individual binary masks $M_h$, $M_v$, it may be opportune to denoise each of the binary masks $M_h$, $M_v$ by performing morphological operations to smooth out the marker areas and remove small outliers. Such morphological operations may especially consist in performing a consecutive erosion and then dilation of the binary image (also known as morphological closing). In the illustration of Figure 14C, and in contrast to the illustrations of Figures 14A and 14B, it is to be noted that the common binary mask $M_{BIN}$ has a value of "0" (shown as a black pixel in Figure 14C) in areas identified as corresponding to expected intermediate areas AB or a value of "'1" (shown as a white pixel in Figure 14C) in areas identified as corresponding to expected marker areas AC.

## Merging strategy

In the illustrated example, merging of the binary masks $M_h$, $M_v$ into the common binary mask $M_{BIN}$ is carried out with an inverted logic, as mentioned, to ensure that the marker areas AC are detected, and not the background, hence the reason why the expected marker areas AC are indicated by value "1" and shown as white pixel clusters in Figure 14C in an otherwise black background corresponding to the intermediate areas AB.

The actual merging strategy may be adapted depending on the remaining noise on the data and the targeted *sampling grid resolution.* Indeed, if the *sampling grid resolution* is small (implying that relatively small marker areas are to be found in the image), it is better to be restrictive to avoid false detections on the borders of the markers as there will be few spaces (i.e. smaller intercode areas) separating the markers, which could create undesired connections between adjacent marker areas. Therefore, in such case, the binary masks $M_h$, $M_v$ are preferably merged when it can be determined that intermediate areas AB have been detected in both masks:

$$M_{BIN} = \overline{\overline{M_v} \cap \overline{M_h}}$$

Conversely, when the *sampling grid resolution* is higher (implying that larger marker areas and intermediate areas are to be found in the image), having only one of the binary masks $M_h$, $M_v$ pointing out to an homogeneous area is better. This will avoid creating connections between adjacent markers as more samples are present between the markers and will lead to denser marker areas that will ease subsequent pixel cluster labelling. In that case, the binary masks $M_h$, $M_v$ are merged as follows:

$$M_{BIN} = \overline{M_v} \cap \overline{M_h} = \overline{M_v \cup M_h}$$

Optionally, additional morphological operations (for instance application of a median filter) could be performed on both of or either one of the inputs $M_h$, $M_v$ and output $M_{BIN}$ of the merging operation.

## Pixel cluster labelling

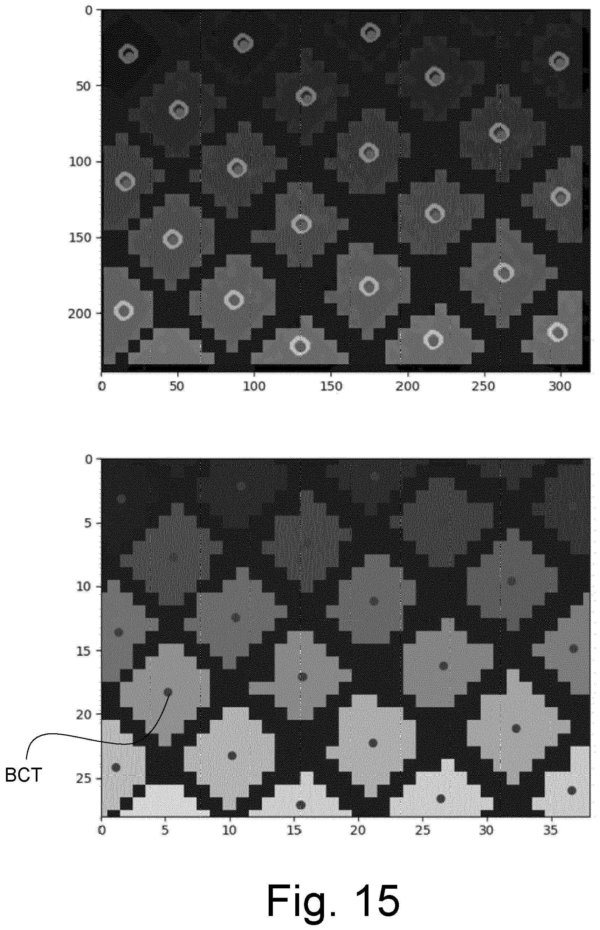

Once a "clean" common binary mask $M_{BIN}$ has been obtained, the next step consists of detecting each marker area AC individually as shown e.g. in Figure 15 (which shows an illustrative segmentation mask $M_{SEG}$ generated based on another exemplary image than that shown e.g. in Figures 7A-D, 12 and 14A-C). Here, a two-pass algorithm known as the Hoshen-Kopelman algorithm (https://en.wikipedia.org/wiki/Hoshen-Kopelman algorithm) is preferably used in order to find pixel clusters that can each be attributed to a single marker area AC and assign them a unique label.

## Connected components

In the illustrative example, a pass of connected component algorithm considering a 4-connected neighbourhood condition (top, left, bottom and right pixels) is applied to the image. Considering an 8-connected neighbourhood condition (same as 4-connected neighbourhood condition + four pixel neighbours along the diagonals) is potentially possible but, due to the relatively low resolution at which the segmentation mask is processed, this may create too many connections between adjacent pixels and could prevent good pixel clustering.
In a single pass, the algorithm will assign a label to every pixel that does not belong to the background, i.e. pixels that are assumed to be indicative of marker areas AC. The label will either be (i) a new label if the current pixel has no previously labelled neighbour or (ii) the smallest neighbouring label if at least one of the processed neighbours has already been labelled.
For some convex shapes, this approach can lead to the assignment of multiple labels to the same area during the first pass mentioned above, which phenomenon is called label collisions (or simply "collisions") hereafter. Keeping track of such collisions is important in order to resolve such label collisions and ensure that a single label ID is assigned to a single marker area expected to include a two-dimensional marker. Therefore, while processing the common binary mask $M_{BIN}$, a collision table indexed by the assigned label is advantageously created. If one pixel has two neighbours with different labels, a collision is identified and the corresponding label IDs are stored in the collision table for subsequent processing and reassignment.

## Collisions management

The goal is here is to unify the label ID assignment by solving the collision table. The approach is relatively straightforward: for each of the labels listed in the collision table, one crawls the collision table to the smallest common label ID of the colliding labels, which is being referred to as the root label. Then, each label is assigned to a root label that is the smallest label used within a contiguous area. Finally, a second pass is performed to assign the root label value for all the labels of the mask.
For the sake of illustration, referring again to Figures 7B to 7D, Figure 7B shows the input image I with the sampling grid GRD superimposed thereupon, and Figure 7C shows the segmentation mask $M_{SEG}$ obtained as a result of the aforementioned processing and pixel cluster labelling. Each pixel cluster in Figure 7C (see also Figure 15) is assigned a unique label ID corresponding to a given marker area detected in the image. Figure 7D corresponds to the transposition of the relevant mask regions into corresponding sub-areas as described further below.

## Segmentation mask filtering

Once all mask areas have been labelled, it is possible to compute their surface area (in grid pixel counts) and determine if the mask areas are too small or too big to contain a two-dimensional marker C, which determination can be made on the basis of the expected surface area of the two-dimensional markers C. If that is the case, then it means that something went wrong in the processing due e.g. to imperfect image focus, illumination or occlusion problems, or some other pattern in the image that prevents a good segmentation of the intermediate areas AB and marker areas AC. For instance, referring again to Figures 7A-D, a portion on the right side of the image I suffers from partial occlusion, leading to interconnection of multiple mask regions on the right-hand side of the image shown in Figure 7C. To cope with this issue, a filter based on labelled area size is applied to exclude all mask regions that are too small or too large, and therefore considered to be irrelevant. The parameters of this filter can be fine-tuned empirically.

Determination of coordinates of sub-areas

Lastly, once the segmentation mask $M_{SEG}$ has been finalized, suitable transposition of the segmentation mask $M_{SEG}$ back to the image I in full *sensor resolution* needs to take place to provide definition of the relevant areas into which the image I is to be segmented. This can be done in various ways. In the illustrated example, a barycentre BCT of each identified pixel cluster in the segmentation mask $M_{SEG}$ identified as being a good candidate for image segmentation is determined, and coordinates thereof (at the *sampling grid resolution*) are converted to corresponding coordinates at full *sensor resolution,* thus identifying a corresponding center of each sub-area in the image I that is expected to include a single two-dimensional marker C. The position of each barycentre BCT is in effect quite robust to small error on the clustering side. This being said, a small margin for error is contemplated to ensure that all of the expected two-dimensional marker C is present in each sub-area and to account for any positioning error as well as rotation of the marker C. Figure 7D shows the transposition of the coordinates of each relevant barycentre BCT determined in the segmentation mask $M_{SEG}$ into corresponding barycentre coordinates in the image I at full *sensor resolution* (sixteen sub-areas - and corresponding barycentre coordinates BCT - being identified in the example of Figure 7D).

Thereafter, the image I at full *sensor resolution* can be split into a corresponding number of sub-areas which may be further processed in an essentially known manner to e.g. decode the two-dimensional code that is expected to be contained therein.

Various modifications and/or improvements may be made to the above-described embodiments without departing from the scope of the invention as defined by the appended claims.

For instance, while the invention has been described with reference to two-dimensional codes consisting of data matrices, the invention is in effect flexible enough to be applicable to any other type of two-dimensional markers, including fiducial markers and like positional markers.

Furthermore, the invention may be applied in other application scenarios than for the purpose of determining a position and orientation of an optical stylus or pen device as long as the relevant surface being imaged likewise includes a multiplicity of spaced-apart markers that are distributed over the surface being imaged. Such other application scenarios may for instance include drone positioning on a landing zone including ArUco markers or applications to augmented reality (AR). The invention may also be applied for the purpose of estimating optical system parameters (such as focal length or image distortion for instance) by precisely localizing multiple markers within an image, such as dot patterns, checkerboard corners, circular patterns, etc..

In that regard, while embodiments of the invention have been described in a context where the two-dimensional markers are distributed with a defined periodicity as an array of individual, spaced-apart markers, the invention is in effect also applicable in application scenarios where the spatial distribution of the markers is irregular or random.

LIST OF REFERENCE NUMERALS AND SIGNS USED THEREIN

| | |
|---|---|
| OSD | optical pen or stylus device |
| 10 | image acquisition sensor |
| 20 | processing system |
| C | two-dimensional markers (e.g. two-dimensional codes such as data matrices) |
| AB | intermediate areas separating neighbouring two-dimensional markers C (background) |
| AC | marker areas containing the two-dimensional markers C |
| A | array of two-dimensional markers distributed over surface S |
| S | surface over which optical pen or stylus device OSD is moved |
| I | image of portion of surface S acquired by image acquisition sensor 10 |
| $I_{SUB}$ | image resulting from subsampling of image I to lower processing resolution |
| ROI | region of interest within subsampled image $I_{SUB}$ |
| GRD | sampling grid |
| SF | sliding filter for computation of rolling mean and rolling variance |
| $TH_1$ | binarization threshold for transformation of statistical profiles of the rolling mean into binary profiles |
| $TH_2$ | binarization threshold for transformation of statistical profiles of the rolling variance into binary profiles |
| $M_h$ | binary mask generated based on conversion of statistical profiles generated along horizontal lines of the sampling grid GRD |
| $M_v$ | binary mask generated based on conversion of statistical profiles generated along vertical lines of the sampling grid GRD |
| $M_{BIN}$ | common binary mask obtained from merging binary mask $M_h$ and $M_v$ |
| PC | individual pixel clusters identified in common binary mask $M_{BIN}$ |
| BCT | barycentre of pixel clusters PC |
| $M_{SEG}$ | segmentation mask for segmentation of image I into multiple sub-areas each containing a single two-dimensional marker C |

## Claims

1. A method of detecting and processing spaced-apart two-dimensional markers (C) that are distributed over a surface (S) to be imaged by means of an image acquisition sensor (10), which method comprises the following steps:

   (a) acquiring an image (I) of at least a portion of the surface (S) by means of the image acquisition sensor (10), which image (I) includes multiple ones of said two-dimensional markers (C);
   (b) segmenting the image (I) acquired at step (a) into multiple sub-areas each containing a single two-dimensional marker (C); and
   (c) subjecting one or more of the sub-areas that contain a two-dimensional marker (C) to further processing,

   wherein segmenting the image (I) at step (b) includes:

   (b1) sampling the image (I) at a coarse sampling resolution lower than a resolution of the image (I) to retrieve statistical data indicative of a distribution of the two-dimensional markers (C) in the image (I) acquired at step (a);
   (b2) processing the statistical data retrieved at step (b1) to identify expected intermediate areas (AB) separating the two-dimensional markers (C) and expected marker areas (AC) containing the two-dimensional markers (C);
   (b3) generating a segmentation mask ($M_{SEG}$) based on the identification of the expected intermediate areas (AB) and marker areas (AC) at step (b2); and
   (b4) segmenting the image (I) acquired at step (a) into the multiple sub-areas based on the segmentation mask ($M_{SEG}$) generated at step (b3).

2. The method of claim 1, wherein sampling the image (I) at step (b1) includes subsampling the image (I) acquired at step (a) to a lower processing resolution and generating a sampling grid (GRD) at the coarse resolution.

3. The method of claim 1 or 2, further comprising the step of defining one or multiple regions of interest (ROI) within the image (I) covering only part of the image (I) and processing only the part of the image (I) contained in each region of interest (ROI) at step (b), wherein each region of interest (ROI) is preferably selected such that a number of two-dimensional markers (C) contained or expected to be contained within each region of interest (ROI) remains substantially constant.

4. The method of any one of the preceding claims, wherein the statistical data are retrieved as step (b1) by computing a rolling mean and a rolling variance along horizontal and vertical sampling lines to generate corresponding statistical profiles, and wherein computing the rolling mean and the rolling variance preferably includes applying a sliding filter (SF) along the horizontal and vertical sampling lines, which sliding filter is preferentially implemented as a rolling buffer.

5. The method of claim 4, wherein processing the statistical data at step (b2) includes converting the statistical profiles into binary profiles by applying binarization thresholds ($TH_1$, $TH_2$) to the statistical profiles.

6. The method of claim 5, applied to the processing of consecutive images (I) acquired by the image acquisition sensor (10), wherein the binarization thresholds ($TH_1$, $TH_2$) are computed based on image statistics obtained from processing of an image (I) that was previously acquired by the image acquisition sensor (10).

7. The method of claim 6, wherein the binarization thresholds ($TH_1$, $TH_2$) are computed by gathering the image statistics upon computation of the rolling mean and rolling variance at step (b2).

8. The method of any one of claims 5 to 7, wherein generating the segmentation mask ($M_{SEG}$) at step (b3) includes generating individual binary masks ($M_h$, $M_v$) based on processing and binarization of the statistical profiles along horizontal and vertical sampling lines and merging the individual binary masks ($M_h$, $M_v$) into a common binary mask ($M_{BIN}$) from which the segmentation mask ($M_{SEG}$) is derived.

9. The method of claim 8, further including performing morphological operations on each of the individual binary masks ($M_h$, $M_v$) prior to merging thereof into the common binary mask ($M_{BIN}$), wherein the morphological operations preferably include consecutive erosion and dilation of the individual binary masks ($M_h$, $M_v$).

10. The method of claim 8 or 9, further including the step of identifying individual pixel clusters (PC) in the common binary mask ($M_{BIN}$) and assigning them a unique label, wherein labelling of the individual pixel clusters (PC) is preferably performed using a Hoshen-Kopelman algorithm.

11. The method of claim 10, further comprising the step of filtering out pixel clusters (PC) having a surface area that differs significantly from an expected surface area of each two-dimensional marker (C).

12. The method of claim 10 or 11, further comprising determining a barycentre (BCT) of each pixel cluster (PC) in the common binary mask ($M_{BIN}$) and determining corresponding coordinates of individual mask regions forming the segmentation mask ($M_{SEG}$), which individual mask regions correspond to the multiple sub-areas into which the image (I) acquired at step (a) is to be segmented.

13. The method of any one of the preceding claims, applied to the processing of consecutive images (I) acquired by the image acquisition sensor (10), wherein the coarse sampling resolution is adapted dynamically from one acquired image (I) to another.

14. The method of any one of the preceding claims, implemented into an optical pen or stylus device (OSD) comprising the image acquisition sensor (10) for the purpose of determining a position and orientation thereof with respect to the surface (S) over which the optical pen or stylus device (OSD) is moved.

15. An optical pen or stylus device (OSD) comprising an image acquisition sensor (10) for acquiring an image of at least a portion of a surface (S) over which the optical pen or stylus device (OSD) is moved, the surface (S) being provided with a plurality of spaced-apart two-dimensional markers (C) that are distributed over the surface (S),

wherein the optical pen or stylus device (OSD) further comprises a processing system (20) configured to process images (I) acquired by the image acquisition sensor (10) and determine a position and orientation of the optical pen or stylus device (OSD) with respect to the surface (S), and wherein the processing system (20) is configured to detect and process the two-dimensional markers (C) contained in images (I) acquired by the image acquisition sensor (10) in accordance with the method of any one of claims 1 to 13.

# Fig. 1

# Fig. 2

Fig. 2A

Fig. 2B

C

I

# Fig. 3A

Camera
coordinate
system

$C_i (x_i, y_i) \in \mathbb{R}^2$

$r_{OSD} (x, y, z)$

Surface
coordinate
system

# Fig. 3B

Fig. 4A

# Fig. 4B

# Fig. 4C

Fig. 5

(a)    IMAGE
       ACQUISITION

(b1)   IMAGE SAMPLING

(b2)   PROCESSING OF
       STATISTICAL
       DATA                          IMAGE
                                     STATISTICS

(b)

(b3)   GENERATION OF
       SEGMENTATION
       MASK

       $M_{SEG}$

(b4)   IMAGE
       SEGMENTATION

(c)    PROCESSING
       OF 2D MARKERS

# Fig. 6

Fig. 7A

Fig. 7B

Fig. 7C

Fig. 7D

Fig. 8

Fig. 9A

Fig. 9B

ROI

Fig. 9C

I

# Fig. 10A

I<sub>SUB</sub>

# Fig. 10B

GRD

## Fig. 10C

SF

## Fig. 10D

## STATISTICAL PROFILES

ROLLING MEAN VERTICAL PROFILE

ROLLING MEAN HORIZONTAL PROFILE

ROLLING VARIANCE VERTICAL PROFILE

ROLLING VARIANCE HORIZONTAL PROFILE

## Fig. 11

EP 4 425 439 A1

Fig. 12

## BINARY PROFILES

### VERTICAL BINARY PROFILE

### HORIZONTAL BINARY PROFILE

## Fig. 13

M_h

Fig. 14A

M_v

Fig. 14B

Fig. 14C

BCT

# Fig. 15

Europäisches
Patentamt

European
Patent Office

Office européen
des brevets

# EUROPEAN SEARCH REPORT

Application Number

EP 23 15 9950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROMERO-RAMIREZ FRANCISCO J ET AL: "Speeded up detection of squared fiducial markers", IMAGE AND VISION COMPUTING, ELSEVIER, GUILDFORD, GB, vol. 76, 15 June 2018 (2018-06-15), pages 38-47, XP085435041, ISSN: 0262-8856, DOI: 10.1016/J.IMAVIS.2018.05.004 | 1-3,13, 14 | INV.<br>G06V10/10<br>G06V10/25<br>G06V30/14<br>G06F3/03 |
| Y | * Sections 1 and 3; | 15 | |
| A | figures 1-4 * | 4-12 | |
| Y | WO 2022/064412 A1 (H GLASS SA [CH]) 31 March 2022 (2022-03-31) | 15 | |
| A | * paragraphs [0009] - [0010;0037]; figures 1-3 * | 1-14 | |
| A | S. GARRIDO-JURADO ET AL: "Automatic generation and detection of highly reliable fiducial markers under occlusion", PATTERN RECOGNITION., vol. 47, no. 6, June 2014 (2014-06), pages 2280-2292, XP055601771, GB ISSN: 0031-3203, DOI: 10.1016/j.patcog.2014.01.005 * Sections 3 and 4; figures 1, 5 11 * | 1-15 | TECHNICAL FIELDS SEARCHED (IPC)<br><br>G06V<br>G06F |

The present search report has been drawn up for all claims

| Place of search | Date of completion of the search | Examiner |
|---|---|---|
| The Hague | 21 July 2023 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9950

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | Publication date | Patent family member(s) | | Publication date |
|---|---|---|---|---|
| WO 2022064412 A1 | 31-03-2022 | AU | 2021350586 A1 | 04-05-2023 |
| | | CA | 3193032 A1 | 31-03-2022 |
| | | CN | 116057500 A | 02-05-2023 |
| | | EP | 4217839 A1 | 02-08-2023 |
| | | WO | 2022064412 A1 | 31-03-2022 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008096153 A1

- WO 2022064412 A1

**Non-patent literature cited in the description**

- Data Matrix Code Location Based on Finder Pattern Detection and Bar Code Border Fitting. **QIANG HUANG et al.** Mathematical Problems in Engineering. Hindawi Publishing Corporation, 10 April 2012, vol. 2012, 1-13
- **LADISLAV KARRACH et al.** Recognition of Data Matrix Codes in Images and their Applications in Production Processes. *Sciendo,* 17 July 2020, vol. 28 (3), 154-161, https://doi.org/10.2478/mspe-2020-0023

- EPnP: An Accurate O(n) Solution to the PnP Problem. **VINCENT LEPETIT et al.** International Journal of Computer Vision. Springer Verlag, 19 July 2008, vol. 81, 155-166
- Infinitesimal Plane-Based Pose Estimation. **TOBY COLLINS et al.** International Journal of Computer Vision. Springer Verlag, 24 July 2014, vol. 109, 252-286